Europäisches Patentamt

European Patent Office

Office européen des brevets

(19)

(11) **EP 0 889 319 A1**

(12) **EUROPÄISCHE PATENTANMELDUNG**

(43) Veröffentlichungstag:
**07.01.1999 Patentblatt 1999/01**

(51) Int. Cl.$^6$: **G01N 21/31**, G01N 21/15

(21) Anmeldenummer: **97810432.1**

(22) Anmeldetag: **02.07.1997**

(84) Benannte Vertragsstaaten:
**AT BE CH DE DK ES FI FR GB GR IE IT LI LU MC
NL PT SE**
Benannte Erstreckungsstaaten:
**AL LT LV RO SI**

(71) Anmelder: **ABB RESEARCH LTD.
8050 Zürich (CH)**

(72) Erfinder:
• **Schade, Ekkehard, Dr.
5405 Baden (CH)**

• **Gloor, Urs
5430 Wettingen (CH)**

(74) Vertreter:
**Pöpper, Evamaria, Dr. et al
Asea Brown Boveri AG
Immaterialgüterrecht(TEI)
Haselstrasse 16/699 I
5401 Baden (CH)**

(54) **Verfahren und Vorrichtungen zur Ermittlung der Konzentration eines Gases in einer Flüssigkeitstropfen enthaltenden Gasmischung sowie Verwendung derselben**

(57) Der $SO_2$-Gehalt einer Tropfenströmung (6) wird festgestellt, indem Intensitäten eines durch dieselbe gesandten Lichtstrahls (7) im Wellenlängenbereich von 280 - 300 nm, in dem für $SO_2$ spezifische Absorptionsbanden auftreten, gemessen und aus dem Vergleich der Schwächung der Intensitäten in verschieden stark absorbierten Teilbereichen die Konzentration ermittelt wird.

Zwischen einem Sender (3) und einem Empfänger (10) oder einem Spiegel (30) und der Tropfenströmung (6) sind jeweils Fenster (4; 8) vorgesehen, welche jeweils als kreisrunde Platten (19; 22) ausgebildet sind. Sie sind jeweils am Zentrum an einer Welle (20; 23) befestigt, die durch einen Elektromotor (21; 24) in eine

Drehbewegung von zwischen 10'000 und 20'000 U/min versetzt wird. Durch die Drehbewegung wird ein Ansetzen von Tropfen aus der Tropfenströmung an den derselben zugewandten Grenzflächen der Fenster (4, 8) verhindert, welches sonst in kurzer Zeit ihre Transparenz so stark reduzieren würde, dass die Intensität des empfangenen Lichtes für eine zuverlässige Feststellung der $SO_2$-Konzentration nicht mehr genügen könnte. Es kann auch ein Spiegel (30) im Strahlengang liegen, welcher ebenfalls unmittelbar an die Tropfenströmung (16) grenzen kann. Er kann zur Bündelung des Lichtstrahls (7) als Hohlspiegel ausgebildet sein.

FIG. 3

**Beschreibung**

Die Erfindung betrifft ein Verfahren zur Ermittlung der Konzentration eines Gases in einer Flüssigkeitstropfen enthaltenden Gasmischung gemäss dem Oberbegriff des Anspruchs 1 sowie Vorrichtungen zur Durchführung des Verfahrens nach dem Oberbegriff der Ansprüche 2 und 4 sowie Verwendungen derselben.

Es ist seit längerem bekannt, die Konzentration bestimmter Komponenten in einem Mischgas zu messen, indem durch dasselbe ein Lichtstrahl, z. B. von einer Xenonlampe erzeugtes Licht mit kontinuierlichem Spektrum, gesandt wird und die Intensitätsminderungen des Lichts in bestimmten schmalen Wellenlängenbereichen, das von besagten Komponenten dort unterschiedlich stark absorbiert wird, gemessen und aus den unterschiedlichen Werten die Konzentrationen der Komponenten berechnet werden.

Im einfachsten Fall, der im folgenden zur Illustration des Verfahrens genauer dargestellt wird, kann man sich mit zwei Wellenlängen begnügen, die von einer interessierenden Komponente des Mischgases unterschiedlich stark absorbiert werden. Wird z. B. vom fraglichen Gas Licht der Wellenlänge $\lambda_1$ mit einem ersten Absorptionskoeffizienten $\alpha_1$ absorbiert und Licht der Wellenlänge $\lambda_2$ mit einem davon verschiedenen zweiten Absorptionskoeffizienten $\alpha_2$, so ergibt sich für die Intensitäten der beiden durch das Mischgas geleiteten Teilstrahlen unter der Annahme, dass die übrigen Komponenten desselben die entsprechenden Wellenlängen nicht absorbieren und die Ausgangsintensitäten jeweils gleich $I_0$ sind:

$$I_1 = I_0 e^{-c\alpha_1 l} \qquad (1)$$

und

$$I_2 = I_0 e^{-c\alpha_2 l} \qquad (2)$$

wobei $l$ die Absorptionslänge, d. h. die Länge des durch das Mischgas zurückgelegten Weges des Lichtstrahls ist und $c$ die Konzentration des Gases.

Aus (1) und (2) ergibt sich

$$\log(I_1/I_2) = c(\alpha_2 - \alpha_1) l \qquad (3)$$

woraus ohne weiteres die Konzentration $c$ bestimmt werden kann, ohne dass nicht wellenlängenspezifische Einflüsse wie Streuung das Resultat störend beeinflussen könnten.

In der Praxis wird der interessierende Teil des Spektrums der Lichtquelle in schmale Teilbereiche aufgeteilt und dann eine gerechnete Absorptionskurve an die gemessene Kurve angepasst, woraus sich dann die Konzentration der interessierenden Komponente ergibt. Auch die Konzentrationen mehrerer Komponenten können auf diese Weise gleichzeitig bestimmt werden.

Beim Versuch, die geschilderte Methode auf eine Flüssigkeitstropfen enthaltende Gasmischung anzuwenden, insbesondere auf eine Tropfenströmung, wie sie z. B. in einem Rauchgaswäscher auftritt, ergibt sich die Schwierigkeit, dass sich stets Tropfen mit suspendierten Feststoffteilchen an den Sender und den Empfänger oder an denselben im Strahlengang nach- bzw. vorgeordneten optischen Leitelementen ansetzen. Dies reduziert die Lichtintensität rasch so stark, dass sie für eine Messung nicht mehr ausreicht.

Aus der US-A-2 879 716 ist es bekannt, bei Messungen in Gasen, die Feststoffpartikel enthalten, zur Verhinderung einer Anlagerung derselben kreisrunde Glasfenster einzusetzen, welche an einer mit 1'420 U/min rotierenden Hohlwelle befestigt sind. Die Reinigung der gegen das Gas gerichteten Grenzfläche eines Fensters erfolgt jeweils durch eine Reinigungsflüssigkeit, die durch die Hohlwelle zugeführt wird und aus einem umlaufenden Spalt, der zwischen der Grenzfläche und einer an der Welle befestigten Kappe gebildet wird, austritt. Durch die Rotation wird die Flüssigkeit nach aussen getrieben und bildet einen Flüssigkeitsfilm.

Dieses Verfahren hat den Nachteil, dass die Flüssigkeit auf der gesamten Grenzfläche des Fensters eine ziemlich dicke, nicht unbedingt gleichmässige Schicht bildet und die Intensität des Lichtstrahls durch Absorption und eventuell Streuung schwächt. Ausserdem ist die Vorrichtung kompliziert im Aufbau, entsprechend teuer in der Herstellung und störungsanfällig.

Aus DE-A-29 31 266 ist es bekannt, in Vorrichtungen zur optischen Rauchdichtemessung langsam rotierende Scheiben einzusetzen, gegen welche zwei ebenfalls langsam rotierende kleinere Reinigungsscheiben gedrückt werden. Vor der ersten Reinigungsscheibe wird als Reinigungsflüssigkeit Spiritus aufgebracht, während die in Drehrichtung unmittelbar folgende zweite als Trockenreinigungsscheibe dient. Aus DE-B-15 72 845 ist eine ähnliche Einrichtung mit einer einzigen Reinigungsscheibe bekannt. Bei beiden Einrichtungen erfolgt die Reinigung im wesentlichen durch mechanische Mittel, so dass entsprechende Vorrichtungsteile im Rauch oder Gas selbst angeordnet werden müssen und sowohl dessen chemischer Einwirkung ausgesetzt sind als auch einer raschen Verschmutzung, die verhältnismässig häufige Wartung nötig macht, unterliegen. Ihr Aufbau ist verhältnismässig kompliziert.

Die beschriebenen vorbekannten Einrichtungen dienen der Entfernung von Feststoffpartikeln und sind für die Beseitigung von sich aus einer Gasmischung niederschlagenden Flüssigkeitstropfen sämtlich wenig geeignet.

Die Erfindung, wie sie in den Ansprüchen gekennzeichnet ist, schafft dagegen ein Verfahren, welches darauf gerichtet ist, die genaue Bestimmung der Konzentration eines Gases in einer Tropfen enthaltenden Gasmischung mit einfachen Mitteln zu ermöglichen und schafft auch entsprechende Vorrichtungen. Die Reinigung erfolgt so, dass mindestens Teile der Grenzflächen im wesentlichen von Flüssigkeit frei bleiben und die Lichtabsorption sehr gering gehalten wird.

Von besonderem Interesse ist die Verwendung des erfindungsgemässen Verfahrens sowie der erfindungsgemässen Vorrichtungen zur Bestimmung der Konzentration bestimmter Schadgase in Verbrennungsanlagen. So kann etwa die Konzentration von $SO_2$ in einem Rauchgaswäscher mit grosser Genauigkeit ermittelt und der festgestellte Wert für die Ueberwachung und Steuerung des Betriebs der Anlage herangezogen werden.

Im folgenden wird die Erfindung anhand von Zeichnungen, welche lediglich ein Ausführungsbeispiel darstellen, näher erläutert. Es zeigen

Fig. 1      schematisch den grundsätzlichen Aufbau einer erfindungsgemässen Vorrichtung nach einer ersten Ausführungsform,

Fig. 2a      einen Längsschnitt durch ein Fenster mit Reinigungseinrichtung der erfindungsgemässen Vorrichtung nach Fig. 1,

Fig. 2b      eine Vorderansicht des Fensters nach Fig. 2a,

Fig. 3      den Aufbau des Senders und des Empfängers gemäss einer zweiten Ausführungsform der erfindungsgemässen Vorrichtung,

Fig. 4      den Aufbau des Senders gemäss einer dritten Ausführungsform der erfindungsgemässen Vorrichtung,

Fig. 5      schematisch den Aufbau einer erfindungsgemässen Vorrichtung nach einer vierten Ausführungsform,

Fig. 6      schematisch den Aufbau einer erfindungsgemässen Vorrichtung nach einer fünften Ausführungsform, und

Fig. 7      schematisch den Aufbau einer erfindungsgemässen Vorrichtung nach einer sechsten Ausführungsform.

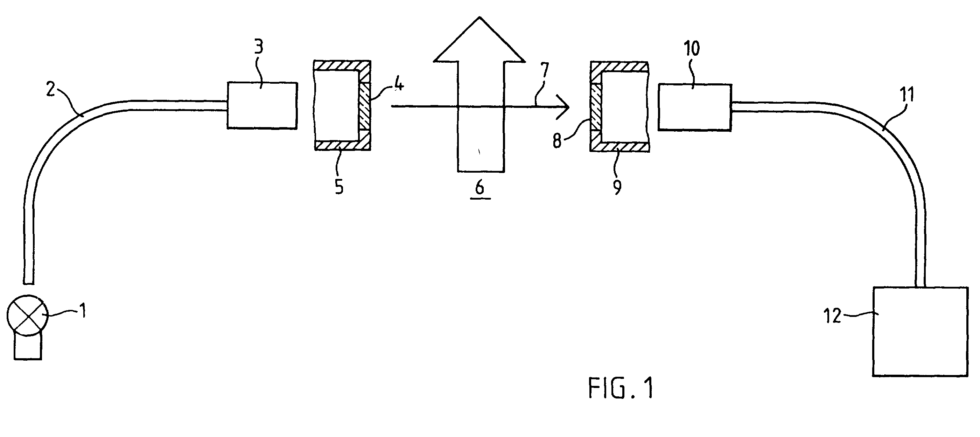

Die Erfindung wird am bereits oben angesprochenen Beispiel der Bestimmung der $SO_2$-Konzentration in einer Tropfenströmung, wie sie z. B. in einem Rauchgaswäscher auftritt, erläutert. In diesem Fall eignet sich (Fig. 1) als Lichtquelle 1 insbesondere eine Xenonlampe, deren Licht im UV-Bereich, insbesondere im Wellenlängenbereich von ca. 280 - 300 nm, in welchem $SO_2$ mehrere ausgeprägte Absorptionsbanden zeigt, ein kontinuierliches Spektrum aufweist. Das Licht derselben wird über einen Lichtleiter 2 einem Sender 3 zugeführt und gelangt durch ein erstes optisches Leitelement, nämlich ein Fenster 4 am Ende eines Rohrs 5 in die dort herrschende Tropfenströmung 6, die es als Lichtstrahl 7 durchdringt. Durch ein weiteres Leitelement, ein Fenster 8 in einem gegenüberliegenden Rohr 9 gelangt es weiter in einen Empfänger 10 und über einen weiteren Lichtleiter 11 in eine Auswerteeinheit 12.

In der Auswerteeinheit 12 werden die in schmalen Teilbereichen des oben angesprochenen Wellenlängenbereichs empfangenen Intensitäten gemessen, mit den bekannten Intensitäten des vom Sender im jeweils entsprechenden Teilbereich ausgesandten Lichts normalisiert, der auf unspezifische Streuung und Absorption zurückgehende Untergund rechnerisch herausgefiltert und aus dem verbleibenden Signal, das die Absorptionsbanden des $SO_2$ deutlich wiederspiegelt, die Konzentration desselben berechnet.

Die Rohre 5 und 9 und mit ihnen die fest eingebauten Fenster 4, 8 werden dabei von einer geeigneten Antriebseinheit mit mindestens 3'000 U/min, vorzugsweise aber zwischen 10'000 U/min und 20'000 U/min gedreht, so dass sich an der der Tropfenströmung 6 zugewandten Grenzfläche derselben ansetzende Tropfen grösstenteils sofort weggeschleudert werden. Ein kleiner Teil bleibt zwar haften, bildet jedoch einen sehr dünnen Flüssigkeitsfilm gleichmässiger Dicke, der die optischen Eigenschaften des Fensters 4 kaum beeinflusst.

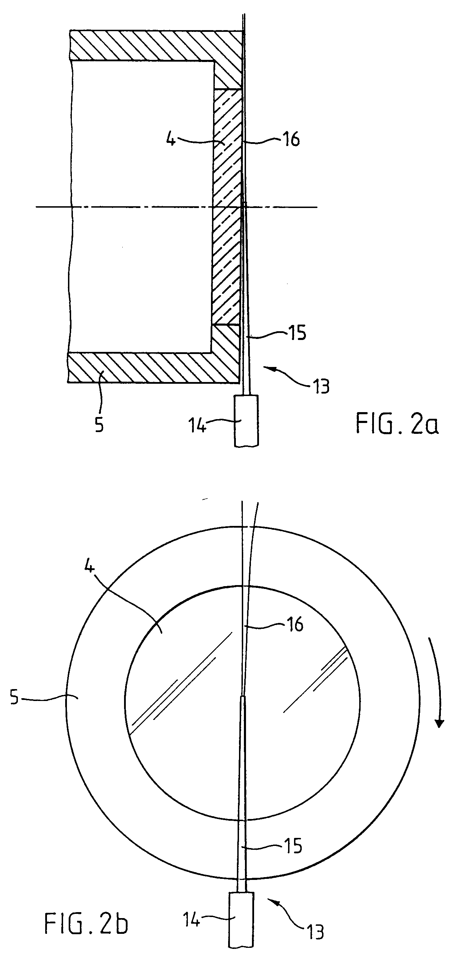

Zur Unterstützung der Reinigung ist (Fig. 2a,b) vor der der Tropfenströmung 6 zugewandten Grenzfläche des Fensters 4 am Ende des Rohres 5 eine Reinigungseinrichtung 13 fest angebracht mit einer Zuleitung 14, an welche eine Hohlnadel 15 anschliesst. Der Endbereich der Hohlnadel 15 bildet eine Düse von ca. 0,4 mm Innen- und ca. 0,6 mm Aussendurchmesser, die fast parallel zur Grenzfläche gerichtet ist; vorzugsweise ist sie mit 1°, höchstens ca. 3° gegen dieselbe geneigt. Die Zuleitung 14 ist mit einem Vorratsgefäss (nicht dargestellt) verbunden, in dem als Reinigungsflüssigkeit eventuell entionisiertes Wasser durch Pressluft unter einem Druck von mindestens 3, vorzugsweise 4-5 bar gehalten wird. Aus der Hohlnadel 15 tritt daher ein scharfer Flüssigkeitsstrahl 16 aus, welcher im wesentlichen gebündelt an der Grenzfläche des sich unter ihm durch drehenden Fensters 4 entlangläuft und ähnlich wie ein mechanischer Scheibenwischer Fremdkörper, vor allem Tropfen, die auch suspendierte Feststoffteilchen enthalten können, von demselben entfernt. Er wird unter dem Einfluss der Drehung geringfügig gespreizt, doch haftet er kaum an der Grenzfläche, so dass sich höchstens ein sehr geringer Anteil über die gesamte Grenzfläche verteilt und allenfalls einen äusserst dünnen, gleichmässigen Flüssigkeitsfilm bildet, der kaum Licht absorbiert oder streut. Der Schatten der dünnen Hohlnadel 15 und des im wesentlichen auf einen engen Sektor konzentrierten Flüssigkeitsstrahls 16 ist sehr schmal und bedeutet praktisch keine Schwächung der Gesamtintensität des Lichtstrahls 7. Am Fenster 8 ist eine genau gleich aufgebaute Reinigungseinrichtung angebracht.

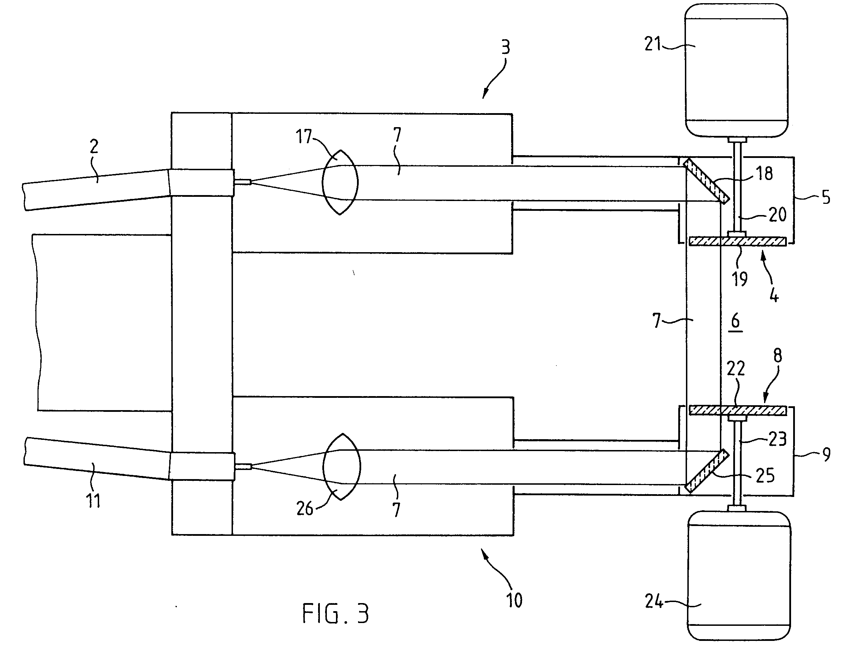

Im Zusammenhang mit einer zweiten Ausführungsform (Fig. 3) wird ein weiterer beispielsweiser Aufbau des Senders 3 und des Empfängers 10 genauer beschrieben. Der Sender 3 weist eine dem Ausgang des Lichtleiters 2 nachgeordnete Optik 17 auf, welche den Lichtstrahl 7 bündelt und auf einen Ablenkspiegel 18 wirft, von dem er durch das Fenster 4 in die Tropfenströmung 6 gelangt. Das Fenster 4 ist als kreisrunde Platte 19 aus Quarz von ca. 25 mm Durchmesser ausgebildet und ist somit für Ultraviolettlicht transparent.

Am Zentrum ist die Platte 19 an einer starren, geraden Welle 20 befestigt, welche von einem Motor, vorzugsweise einem Elektromotor 21 als Antriebseinheit angetrieben wird. Die Platte 19 ist hier in einer kreisrunden Oeffnung am Ende des Rohrs 5 angeordnet und zwar derart, dass zwischen ihrem Rand und dem Rand der Oeffnung ein Spalt von ca. 0,5 mm Breite freibleibt, so dass die Drehbewegung der Platte 19 nicht gehindert ist. Damit kein Gas aus dem Bereich der Tropfenströmung 6 durch den besagten Spalt dringen kann, ist der hinter dem Fenster 4 liegende Raum mit Stickstoff gefüllt und zwar steht derselbe unter einem Druck, der etwas über dem statischen Druck der Tropfenströmung 6 liegt. Die durch den Spalt in die Tropfenströmung 6 fliessende Stickstoffmenge ist dabei so gering, dass sie die Absorptionslänge und damit das Messergebnis nicht nennenswert beeinflusst.

Der Empfänger 10 ist hinter dem Fenster 8 - genau wie das Fenster 4 auf der Senderseite eine kreisrunde Platte 22 aus Quarz, welche über eine Welle 23 von einem Elektromotor 24 angetrieben wird - angeordnet und mit einem Ablenkspiegel 25 und einer Optik 26, welche den Lichtstrahl 7 auf das Ende des Lichtleiters 11 sammelt, genau gleich aufgebaut wie der Sender 3.

Die Elektromotoren 21, 24 versetzen die Platten 19, 22 ähnlich wie bereits im Zusammenhang mit der ersten Ausführungsform beschrieben in rasche Rotation. Vor den Fenstern 4, 8 sind den dort beschriebenen genau entsprechende Reinigungseinrichtungen angebracht, die der besseren Uebersichtlichkeit halber nicht dargestellt sind.

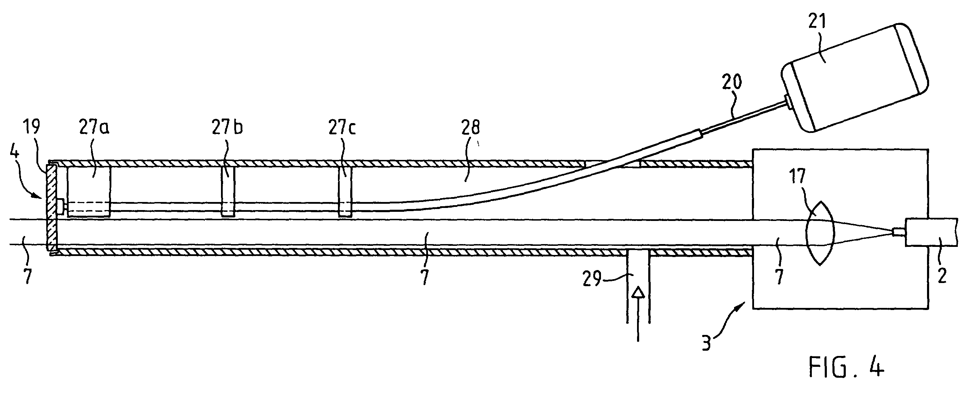

Gemäss einer dritten Ausführungsform (Fig. 4) ist im Sender 3 kein Ablenkspiegel vorgesehen, sondern die Optik 17 wirft den Lichtstrahl 7 direkt auf die Platte 19 des Fensters 4.

Die Welle 20 ist flexibel ausgebildet und wird aus der Rotationsachse heraus zum Elektromotor 21 geführt. Sie ist in mehreren Halterungen 27a, b, c drehbar gelagert. Zwischen der Optik 17 und dem Fenster 4 liegt ein Raum 28, der bis auf eine seitliche Durchführung für die Welle 20 und den die Platte 19 umgebenden Ringspalt am Fenster 4 geschlossen ist. Zur Aufrechterhaltung des erforderlichen Ueberdrucks, der wie oben erläutert ein Eindringen von Gas aus dem Bereich der Tropfenströmung 6 (Fig. 1) verhindert, ist eine Zuleitung 29 vorgesehen, über welche als Spülgas Stickstoff zugeführt wird. Der Empfänger kann gleich aufgebaut sein.

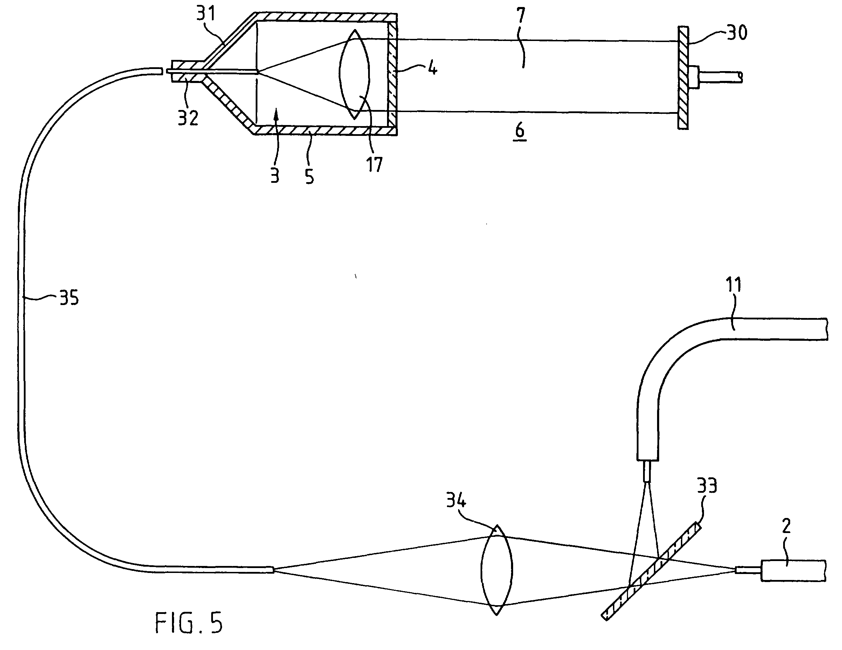

Bei der in Fig. 5 dargestellten vierten Ausführungsform dient der im Rohr 5 fest eingebaute Sender 3 gleichzeitig als Empfänger, während dem Fenster 4 als zweites optisches Leitelement ein Spiegel 30, vorzugsweise eine polierte Metallplatte, gegenüberliegt. Am hinteren Ende des Rohres 5 schliesst ein konischer Stutzen 31 mit einem axialen Lichtleiterabschnitt 32 an. An den von der Lichtquelle kommenden ersten Lichtleiter 2 ist über einen Strahlteiler 33 und eine Optik 34 ein zweiter Lichtleiter 35 gekoppelt, welcher bis an den Stutzen 31 führt. Der Lichtleiter 11 führt vom Strahlteiler 33 zur Auswerteeinheit.

Das Licht aus dem Lichtleiter 2 tritt zum Teil durch den Strahlteiler 33 durch und wird durch die Optik 34 in den Lichtleiter 35 eingekoppelt. An dessen Ende tritt es durch einen Luftspalt in den Lichtleiterabschnitt 32 des Senders 3 über. Anschliessend wird es als aus demselben austretender Lichtstrahl 7 durch die Optik 17 gebündelt und durch das Fenster 4 und die Tropfenströmung 6 zum Spiegel 30 geleitet. Dort reflektiert, läuft es den beschriebenen Weg bis zum Strahlteiler 33 zurück, der einen Teil des Lichtes dem Lichtleiter 11 zur Weiterleitung an die Auswerteeinheit zuführt. Der Spiegel 30 wie das Rohr 5 mit dem Sender 3 und dem Fenster 4 rotieren, von Elektromotoren angetrieben wie im Zusammenhang mit den vorgängig beschriebenen Ausführungsformen erläutert. Auch sind beide mit einer Reinigungseinrichtung der weiter oben beschriebenen Art ausgestattet.

Der Einsatz des Strahlteilers 33 verursacht zwar eine gewisse Einbusse an Lichtintensität, dafür ist die Vorrichtung äusserst einfach aufgebaut und entsprechend kostengünstig realisierbar.

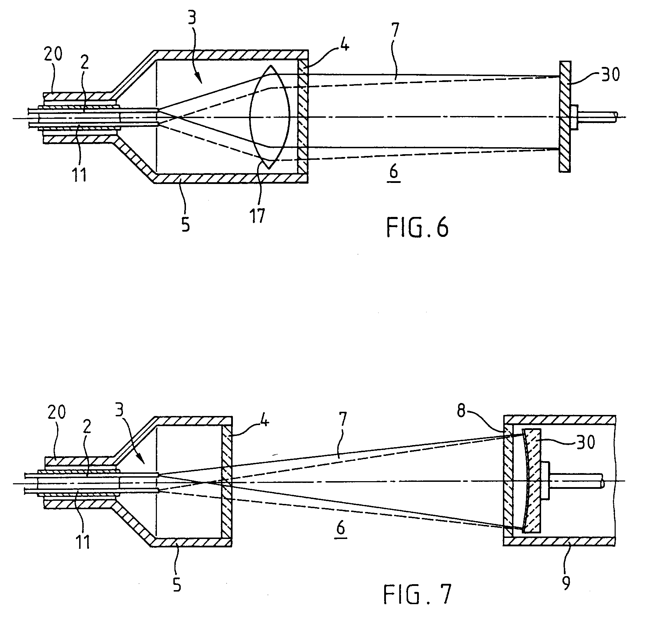

Bei der fünften Ausführungsform (Fig. 6) ist der Einsatz eines Strahlteilers vermieden, indem die Lichtleiter 2 und, etwas versetzt, 11 durch die das Rohr 5 tragende Welle 20, welche zu diesem Zweck als Hohlwelle ausgebildet ist, durchgezogen sind Sie treten an der Rückseite des (nicht dargestellten) Elektromotors aus der Welle 20 aus und sind von dort zur Lichtquelle 1 bzw. der Auswerteeinheit 12 geführt. Der Lichtstrahl 7 tritt etwas schräg zur Achse aus dem Lichtleiter 2 aus, so dass er, von der Optik 17 gebündelt, nach dem Durchgang durch das Fenster 4 und die Tropfenströmung 6 auch schräg auf den Spiegel 30 trifft und nach Reflexion an demselben und neuerlichem Durchgang durch die Tropfenströmung 6 und das Fenster 4 von der Optik 17 auf das Ende des Lichtleiters 11 gesammelt wird.

Der Spiegel 30 ist genau gleich ausgebildet wie bei der vorstehenden Ausführungsform. Auch hier sind vor dem Fenster 4 und dem Spiegel 30 nicht dargestellte Reinigungseinrichtungen angeordnet.

Prinizipiell gleich aufgebaut wie gemäss der fünften Ausführungsform ist der auch hier mit dem Empfänger integrierte Sender 3 bei der sechsten (Fig. 7). Allerdings ist keine Optik vorgesehen und das Rohr 5 entsprechend kürzer.

Der Spiegel 30 dagegen ist als Hohlspiegel aus beschichtetem Glas ausgebildet. Er ist stationär hinter dem am Ende des Rohrs 9 angebrachten Fenster 8 angeordnet, welches das an die Tropfenströmung 6 grenzende zweite Leitelement bildet. Das Rohr 9 ist wiederum drehbar aufgehängt und von einem Elektromotor angetrieben.

Der auseinanderlaufende Lichtstrahl 7 tritt wieder etwas schräg aus dem Lichtleiter 2 und durch das Fenster 4, die Tropfenströmung 6 und das Fenster 8, so dass er vom Spiegel 30 auf das Ende des gegenüber dem Lichtleiter 2 versetzt angeordneten Lichtleiters 11 gesammelt wird. Da keine Linsenoptik erforderlich ist, wird bei dieser Ausführungsform nicht nur eine beträchtliche Einsparung erzielt, es wird auch die beim Einsatz von Linsensystemen unvermeidliche Lichtabschwächung vermieden.

Es gibt natürlich weitere Möglichkeiten, den Erfindungsgedanken ins Werk zu setzen. So können die beiden optischen Leitelemente über entsprechende Kraftübertragungssysteme von einem gemeinsamen Elektromotor angetrieben werden. Eventuell können auch beide an einer einzigen Welle befestigt sein. Die Reinigungseinrichtungen können u. U. auch entfallen, vor allem dann, wenn die Drehzahl der Leitelemente sehr hoch - in der Regel mindestens 3'000 U/min - ist. Dann kann die hohe Fliehkraft allein sicherstellen, dass sich höchstens ein sehr dünner, nicht mehr in störendem Ausmass Licht absorbierender Flüssigkeitsfilm bildet.

**Patentansprüche**

1. Verfahren zur Ermittlung der Konzentration eines Gases in einer Flüssigkeitstropfen enthaltenden Gasmischung, indem ein Lichtstrahl (7), welcher durch Ueberlagerung von mindestens zwei Anteilen unterschiedlicher Wellenlängen gebildet wird, durch die Gasmischung gesandt, die Intensitäten seiner Teilstrahlen bestimmt und die Konzentration aus denselben berechnet wird, wobei im Strahlengang unmittelbar angrenzend an die Gasmischung optische Leitelemente mit gegen dieselbe weisenden Grenzflächen angeordnet sind, **dadurch gekennzeichnet, dass** mindestens ein Teil jeder Grenzfläche von Flüssigkeit im wesentlichen frei gehalten wird, und zwar mindestens teilweise durch zyklische Bewegung der Leitelemente.

2. Vorrichtung zur Durchführung des Verfahrens nach Anspruch 1, mit einem Sender (3) zum Aussenden eines die Gasmischung durchdringenden Lichtstrahls (7), welcher durch Ueberlagerung von mindestens zwei Anteilen unterschiedlicher Wellenlängen gebildet wird und einem Empfänger (10) zum Empfangen und Weiterleiten desselben an eine Auswerteeinheit (12) zur Bestimmung der Intensitäten seiner Teilstrahlen und Berechnung der Konzentration aus denselben, wobei im Strahlengang zwischen dem Sender (3) und dem Empfänger (10) optische Leitelemente mit gegen die Gasmischung weisenden Grenzflächen, nämlich mindestens ein für den Lichtstrahl transparentes, zwischen dem Sender (3) und der Gasmischung angeordnetes erstes Fenster (4) sowie ein zweites Leitelement derart drehbar angeordnet sind, dass der Sender (3) und der Empfänger (10) von der Gasmischung getrennt sind, welchen Leitelementen mindestens eine Antriebseinrichtung zugeordnet ist, welche geeignet ist, jedes Leitelement einer Drehbewegung zu unterwerfen, **dadurch gekennzeichnet, dass** die Tourenzahl der Drehbewegung mindestens 3'000 U/min beträgt.

3. Vorrichtung nach Anspruch 2, **dadurch gekennzeichnet, dass** die Tourenzahl der Drehbewegung zwischen 10'000 und 20'000 U/min beträgt.

4. Vorrichtung zur Durchführung des Verfahrens nach Anspruch 1, mit einem Sender (3) zum Aussenden eines die Gasmischung durchdringenden Lichtstrahls (7), welcher durch Ueberlagerung von mindestens zwei Anteilen unterschiedlicher Wellenlängen gebildet wird und einem Empfänger (10) zum Empfangen und Weiterleiten desselben an eine Auswerteeinheit (12) zur Bestimmung der Intensitäten seiner Teilstrahlen und Berechnung der Konzentration aus denselben, wobei im Strahlengang zwischen dem Sender (3) und dem Empfänger (10) optische Leitelemente mit gegen die Gasmischung weisenden Grenzflächen, nämlich mindestens ein für den Lichtstrahl transparentes, zwischen dem Sender (3) und der Gasmischung angeordnetes erstes Fenster (4) sowie ein zweites Leitelement derart drehbar angeordnet sind, dass der Sender (3) und der Empfänger (10) von der Gasmischung getrennt sind, welchen Leitelementen mindestens eine Antriebseinrichtung zugeordnet ist, welche geeignet ist, jedes Leitelement einer Drehbewegung zu unterwerfen, **dadurch gekennzeichnet, dass** jedem Leitelement eine Reinigungseinrichtung (13) zugeordnet ist, die eine Düse zur Erzeugung eines Flüssigkeitsstrahls (16) umfasst, welcher gebündelt an der Grenzfläche entlangläuft.

5. Vorrichtung nach Anspruch 4, **dadurch gekennzeichnet, dass** die Düse jeweils unter einem Winkel von höchstens 3° schräg gegen die Grenzfläche gerichtet ist.

6. Vorrichtung nach Anspruch 4 oder 5, **dadurch gekennzeichnet, dass** der Innendurchmesser der Düse höchstens 0,5 mm beträgt.

7. Vorrichtung nach einem der Ansprüche 4 bis 6, **dadurch gekennzeichnet, dass** die Düse durch eine Hohlnadel (15) gebildet wird.

8. Vorrichtung nach einem der Ansprüche 4 bis 7, **dadurch gekennzeichnet, dass** die den Flüssigkeitsstrahl (16) bildende Flüssigkeit unter einem Druck von mindestens 3 bar steht.

9. Vorrichtung nach einem der Ansprüche 2 bis 8, **dadurch gekennzeichnet, dass** das mindestens eine Fenster (4) am Ende eines drehbar aufgehängten, angetriebenen Rohres (5) fest eingebaut ist.

10. Vorrichtung nach einem der Ansprüche 2 bis 9, **dadurch gekennzeichnet, dass** die Grenzflächen mindestens eines der Leitelemente kreisrund und dasselbe jeweils mit einer von der mindestens einen Antriebseinrichtung angetriebenen, die Grenzfläche im Zentrum schneidenden Welle (20; 23) verbunden ist.

11. Vorrichtung nach einem der Ansprüche 2 bis 10, **dadurch gekennzeichnet, dass** das zweite Leitelement als dem ersten Fenster (4) gegenüberliegendes zweites Fenster (8) ausgebildet ist.

12. Vorrichtung nach Anspruch 11, **dadurch gekennzeichnet, dass** auf der der Gasmischung abgewandten Seite des zweiten Fensters (8) der Empfänger (10) angeordnet ist.

13. Vorrichung nach Anspruch 11, **dadurch gekennzeichnet, dass** auf der der Gasmischung abgewandten Seite des zweiten Fensters (8) ein Spiegel (30) angeordnet ist.

14. Vorrichtung nach einem der Ansprüche 2 bis 10, **dadurch gekennzeichnet, dass** das weitere optische Leitelement als Spiegel (30) ausgebildet ist.

15. Vorrichtung nach Anspruch 13 oder 14, **dadurch gekennzeichnet, dass** der Spiegel (30) als Hohlspiegel ausgebildet ist.

16. Vorrichtung nach einem der Ansprüche 2 bis 15, **dadurch gekennzeichnet, dass** das mindestens eine Fenster (4; 8) jeweils als zur Achse der Drehbewegung senkrechte ebene Platte (19; 22) ausgebildet ist.

17. Vorrichtung nach einem der Ansprüche 10 bis 16, **dadurch gekennzeichnet, dass** das mindestens eine Fenster (4; 8) jeweils in einer kreisrunden Oeffnung derart angeordnet ist, dass zwischen seinem Rand und dem Rand der Oeffnung ein Spalt freibleibt und dass an die von der Gasmischung abgewandte Seite des Fensters (4; 8) ein mit einem Gas gefüllter Raum (28) anschliesst, in welchem ein über dem statischen Druck in der Gasmischung liegender Druck aufrechterhalten wird.

18. Vorrichtung nach einem der Ansprüche 1 bis 17, **dadurch gekennzeichnet, dass** der Lichtstrahl (7) Ultraviolettlicht enthält und das Fenster (4; 8) jeweils im wesentlichen aus Quarz besteht.

19. Verwendung der Vorrichtung nach einem der Ansprüche 2 bis 18 zur Ermittlung der Konzentration von Schadgasen in einer Verbrennungsanlage.

20. Verwendung der Vorrichtung nach Anspruch 18 zur Ermittlung der Konzentration von $SO_2$ in einem Rauchgaswäscher.

FIG. 1

EP 0 889 319 A1

FIG. 2a

FIG. 2b

FIG. 3

FIG. 4

FIG.5

FIG.6

FIG. 7

Europäisches
Patentamt

**EUROPÄISCHER RECHERCHENBERICHT**

Nummer der Anmeldung

EP 97 81 0432

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | US 2 878 716 A (F.C. LEONARD) 24.März 1959 * Spalte 2, Zeile 13 - Spalte 4, Zeile 59 * | 1-20 | G01N21/31 G01N21/15 |
| | --- | | |
| Y | EP 0 337 108 A (WESTINGHOUSE ELECTRIC CORP) * Spalte 2, Zeile 13 - Spalte 4, Zeile 44; Abbildungen 3,4 * | 1-20 | |
| | --- | | |
| A | US 3 935 463 A (JACOBSEN JOHN KENNETH) * Spalte 1, Zeile 3 - Spalte 3, Zeile 24; Abbildung 1 * | 4-8 | |
| | ----- | | |

**RECHERCHIERTE SACHGEBIETE (Int.Cl.6)**

G01N

Der vorliegende Recherchenbericht wurde für alle Patentansprüche erstellt

| Recherchenort | Abschlußdatum der Recherche | Prüfer |
|---|---|---|
| MÜNCHEN | 1.Dezember 1997 | Müller, T |